Europäisches Patentamt

European Patent Office

Office européen des brevets

(11) Publication number: **0 202 372**
**B1**

(12) **EUROPEAN PATENT SPECIFICATION**

(45) Date of publication of patent specification: **16.08.89**

(51) Int. Cl.⁴: **B 29 C 45/73**, B 29 C 45/37

(21) Application number: **85303598.8**

(22) Date of filing: **22.05.85**

(54) Method and device for injection moulding thermoplastic materials.

(43) Date of publication of application:
**26.11.86 Bulletin 86/48**

(45) Publication of the grant of the patent:
**16.08.89 Bulletin 89/33**

(84) Designated Contracting States:
**AT BE CH DE FR GB IT LI NL**

(56) References cited:
**AU-B- 32 260**
**DE-A-2 927 429**
**FR-A-1 206 467**
**FR-A-2 289 314**
**GB-A-1 422 109**
**US-A-3 268 635**
**US-A-4 172 872**
**US-A-4 390 485**
**IBM TECHNICAL DISCLOSURE BULLETIN, vol. 17, no. 2, July 1974, pages 479,480, New York, US; A. DELANEY et al.: "Plastic molding apparatus"**
**KUNSTSTOFFE, vol. 63, no. 10, 1973, pages 659,660, München, DE; G. TRAUSCH et al.: "Spezielle Spritzgiessverfahren"**

(73) Proprietor: **Vyrobni hospodárská jednotka SUPRAPHON oborovy podnik Praha No 1 Palackého CS-112 99 Praha 1 (CS)**

(72) Inventor: **Vasicek, Alois No. 35, Opletalova Praha 1 (CS)**
Inventor: **Neuhäusl, Emil No. 2850 Narcisova Praha 10 (CS)**
Inventor: **Valrnta, Svatopluk, Prof. No. 1615 Landové-Stychové Praha 4 (CS)**
Inventor: **Král, Jan No. 134 Svermova Ricany u Prahy (CS)**

(74) Representative: **Arthur, John William et al FITZPATRICKS 4 West Regent Street Glasgow G2 1RS Scotland (GB)**

## Description

The invention relates to a method of and apparatus for injection moulding of thermoplastics materials.

In previously proposed method of injection moulding thermoplastics materials the material, which is normally supplied as granules, is first melted in a plastification unit, normally a cylindrical barrel, and the melt is then injected, by means of the axial motion of a worm or piston, into a mould, where it is cooled and acquires the final shape of the manufactured product. However, as the melt enters the mould, the temperature of which is considerably lower than temperature of the glass transition of amorphous polymers or temperature of melting temperature of semicrystalline polymers, the melt cools down very quickly and its ability to flow decreases rapidly. It is therefore necessary to inject the polymer into the mould at a very high melt temperature, at high velocity and under high pressure so that the whole of the intergral space of the mould is completely filled with liquid material. The heating of thermoplastics material to a high temperature is limited by the thermal stability of the particular polymer and the rate of injection is limited by the design of the injection unit. The injection unit is able to provide via the piston or worm only such a force which is proportional to the pressure of hydraulic liquid provided by a pump, and is also related to the properties of the polymer melt, which may be mechanically degraded as it passes through the injection nozzle at high temperature. To minimise these restrictions it has been suggested that the moulds, particularly for complicated shapes, be heated to a temperature several degrees lower than the temperature of the glass transition of amorphous polymer or of the melting temperature of melting of crystalline polymers. In this way the rheological properties of the melt are improved.

However the time taken for a melt to cool in the mould is longer, because it is also necessary to cool at least part of the mould and in this way the rate of production is considerably decreased.

Temperature control of the mould during the working process has not hitherto been carried out in practice and in fact it is not practically possible to carry it out, as metal moulds are usually of a high weight and to heat them requires too much power and time.

Another drawback of hitherto known methods of injection moulding is that before injection of the melt is complete volume contractions have begun to occur because of the cooling of previously injected quantities of the melt thus affecting the flow characteristics of the visco-elastic material causing nonuniformity of orientation and stress of the material and thus deleteriously affecting quality. A complete elimination of these disadvantageous phenomena is probably impossible in the hitherto known and used production processes as they arise from the design of the mould, the injection system and the temperature distribution in the mould.

It has been proposed to mould thermoplastics using flexible mould parts supported within conventional mould parts, the said flexibile mould parts being enclosed by diaphragms which are filled with oil to support the flexible parts during moulding, which oil may be hot or cold to heat or cool the mould (IBM technical disclosure bulletin Vol. 17 No. 2 July 1974).

An object of the present is to obviate or mitigate the aforesaid disadvantages.

Accordingly, the present invention provides apparatus and a method for the injection moulding of a thermoplastics materials as defined in the claims hereafter.

The invention also provides a mould for use in the above method comprising a mould block, within the block a partition wall of metal foil dividing the mould into a shape-defining mould space and a heating/cooling jacket surrounded by a layer of thermal insulation, a melt injection channel extending from the mould space, inlet and outlet means in said jacket for passage of heating and cooling media, and temperature and pressure control means for said media.

Preferably the metal foil is of electrically resistive metal connectable to a current source of supply of heating current.

The mould of the invention is easily, quickly and accurately heated to the optimum temperature for injecting amorphous polymers or semicrystalline polymers and after the mould is filled with the melt it is possible to perform a controlled and relatively rapid cooling of the injected product. The mould space is defined within a thin wall, formed, for example by a shaped metal foil or membrane. Deformation of the thin wall by pressure of the injected metal is prevented by injecting the temperature controlling medium, normally liquid, at the same pressure as the melt injection pressure.

Another advantage of the mould of the invention is its simple production, as the basic part of the mould can be used for many different products, and only the shape of the thin wall need be changed. The production of the wall in thin metal is much simpler than the production of hitherto solid block moulds.

The invention will now be described, by way of example, with reference to the accompanying drawings of which:

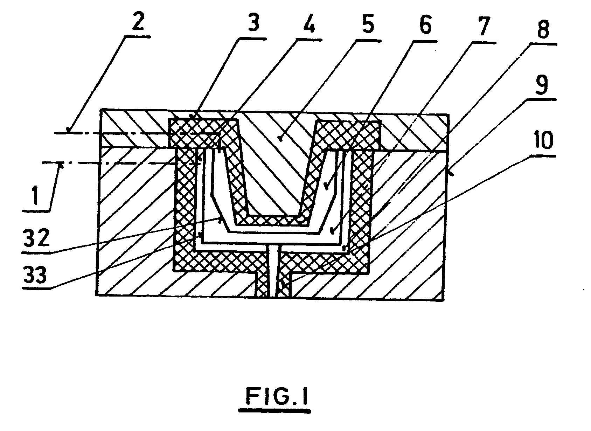

Fig. 1 shows a cross-section of the mould of the invention for injection moulding; and

Fig. 2 is a block diagram of the injecting apparatus and control mechanism.

A mould for producing objects by injection moulding of a melt of thermoplastics material is a two part mould having an upper metal part 5 and lower metal part 9, which when placed together form an internal space 7. In the internal space 7 there is provided a wall 32, attached to upper part 4 and wall 33 attached to lower part 9, which are of a small thickness, their surfaces defining the shape of the article to be produced. The walls 32 and 33 are made of a thermally conductive foil, membrane or plate. Between the walls 32, 33 and parts 5 and 9 there are formed temperature controlling spaces 6 and 8 respectively, which may be divided, in another embodiment of the invention, into small chambers. Into these temperature controlling spaces 6, 8 there is delivered a temperature controlling liquid medium through an inlet 1. The said liquid is then discharged through outlet 2 to heat the walls 32, 33 to a desired temperature before injection. After filling of the mould space 7 the cooling of the melt forming space 7 is controlled by decreasing the tempeature of the supplied liquid.

To minimise heat loss the temperature controlling spaces 6, 8 are separated from metal parts 5, 9 of the jacket of the mould by means of thermally insulating layers 3, 4 and the inlet channel for injecting the melt from the injector is also surrounded by a thermal insulation 10.

To prevent deformation of the walls 32, 33 during injection there is maintained in the temperature controling spaces 6, 8 a pressure of temperature controlling liquid, which is substantially the same as the injection pressure of the melt. The control of the cooling phase is effected by control of the temperature of the controlling liquid.

If the apparatus is not provided with means for continuous control of the temperature of the temperature controlling liquid, it is possible to work with two temperature controlling media at different temperatures and the internal space is then divided by means of partitions into several smaller chambers.

The walls 32, 33 may be made of materials having a high electric resistance so that they can be heated by means of an electric current supplied to the walls. The cooling may be preformed in this case by means of circulating cooling liquid.

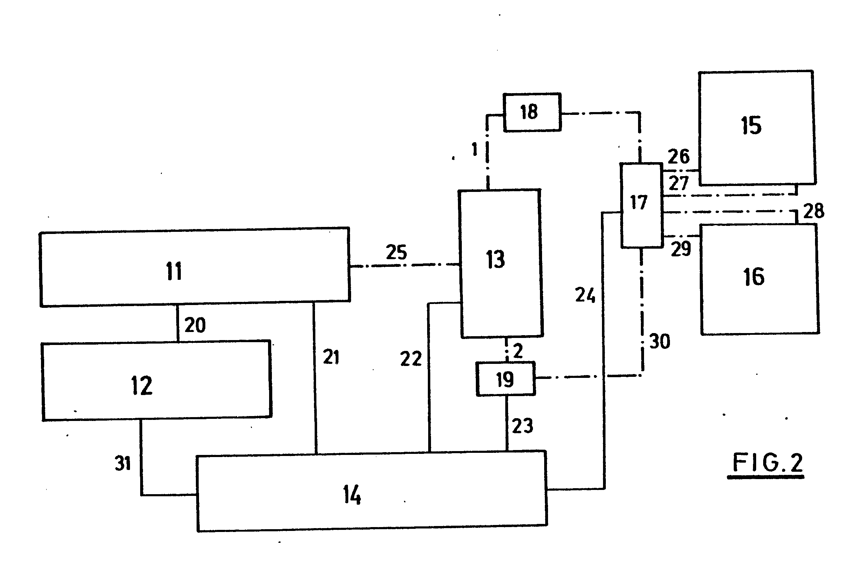

The block diagram of the whole apparatus for producing injection moulded products is shown in Fig. 2. Thermoplastics material is injected into the mould 13 by an injecting device 11 controlled by means of a control unit 12, from which the necessary control signals 20 as supplied. The control unit 12 is controlled by means of a logic unit 14 which processes feedback information concerning the course of the processes during the injection and connected to the control unit by means of a coupling 31.

Into the logic unit 14 there is supplied a first signal 21, characterizing the distribution of temperature and pressure of material in the injection device 11, and a second signal 22, specifying the pressure of melt in the mould 13, into which the melt is injected via the injection inlet 25. The logic unit controls, on the basis of this feedback information, the pressure of the temperature controlling medium by controlling a control valve 19 by means of the third signal 23. Another task of the logic unit 14 is the controlling of the regime of heating of the mould 13, which, in this embodiment, is realized by controlling servovalves 17 by means of the fourth signal 24. The temperature control of the mould 13 is carried out by circulating of the temperature controlling medium by a pump 18. The temperature controlling medium enters the mould 13 through inlet 1 and it is discharged through outlet 2. The temperature controlling medium, having passed through the control valve 19, passes by way of a duct 30 to the servovalves 17, the function of which is to set up the regime of heating or cooling of the mould 13. When liquid from container 15 of cooling medium is required, the inlet 26 and outlet 27 are used. When the mould 13 is heated by means of a liquid from container 16 of heating medium, the third inlet 28 and the third outlet 29 are used.

In use it is not necessary to heat the thermoplastics material to such a high temperature as is used in hitherto known production processes. When, for example, in the production of articles of polypropylene in a metal mould of 100 kg weight, heated to 60°C it has hitherto been necessary to heat the melt up to at least 200°C it is only necessary in the method of this invention to heat the melt to a temperature of 160°. When cooling the walls 32, 33 by means of the cooling liquid of a temperature of 20°C, the product is cooled in approximately half the time necessary in prior processes. The quality of products, as far as internal stress of material, is several times better when produced by the method of the invention than by hitherto known production processes.

The technology of the injection of thermoplastics material into temperature controlled moulds by this invention may be advantageously applied for small-lot production of products of complicated shape, on which their mechanical, optical an dimensional properties are critical, for example, for producing components for car and aircraft industry and for optical workpieces such as lenses, prisms and grids.

This technology has also been tested successfuully for production of large parts made of amorphous and semi-crystalline polymers, where the advantages were the low price of the mould, the relatively low closing forces on lockable moulds (pressure is compensated by the internal pressure of the heating and cooling liquids thus compensating for the so-called "perspiring" of the mould) and the possibility of increasing the amount of crystalline phase in the polymer by controlling the temperature regime in the mould.

When applying the technology according to the invention, the so-called "cold joints" were obviated in articles of complicated shape.

The following Examples illustrate the method of the invention.

## Example 1

The method of a production of articles of thermoplastics material according to the invention was applied for manufacturing technical products of a shape of a full sphere of diameter 80 mm made of polystyrene.

For this product minimum internal stress and maximum optical istropy (under 100 nm) was required.
The injection cycle for the production of this product was of the following parameters:

| Injection rate: | 20 cm$^3$/sec |
|---|---|
| Temperature of melt: | 150°C |
| Temperature of heating liquid: | 95°C |
| Temperature of cooling liquid: | 20°C |
| Pressure of melt in the moment of changing to finish pressure: | 15 MPa |
| Filling time: | 13.8 sec. |
| Time of finish pressure: | 62 sec |

The regime of blank cooling: pulse cooling up to temperature of a glass transition of a polymer and a successive rapid cooling down of external walls of the mould. The chosen products were tested by exposure in a tensoactive environment and they were tested for isotropy of macromolecules by means of the method of photoelastometry.

Results of these tests of 50 blanks did not leave the required values of quality with respect to optical isotropy, and the exposing of the articles in a tensoactive environment did not create any significant cloudiness, thus indicating very low stress in the article.

Example 2

The technology according to the invention was used to produce a pentagonal optical prism made of polymethylacrylate (Trade Mark UMAKRYL KI) for optical instruments. For this production the following technological parameters were used:

| Temperature of melt: | 180°C |
|---|---|
| Temperature of heating liquid: | 145°C |
| Temperature of cooling liquid | 20°C |
| Pressure of melt: | 11,3 MPa |
| Volume of the blank: | 35 cm$^3$ |
| Time for one cycle: | 12 sec. |

When testing optical quality of products the percentage reject rate was 0,22% of the whole production.

Example 3

Technology according to the invention was applied for a production of gears made of polyamide 6.

| Temperature of melt: | 180—185°C |
|---|---|
| Mould was heated to temperature: | 128°C |
| Pressure of melt in the moment of changing from filling pressure to finish pressure: | 9,9 MPa |
| Temperature of cooling liquid: | 18—22°C |

The gears thus produced had strength which was on average 23% higher than similar gears produced by means of prior technology, that is, by injection into cool moulds, and the tolerance deviations of the gears produced by means of the technology of the invention were lower on average by 48% than the deviations found in gears produced by means of the prior technology. The time for one cycle was 18% lower than with prior technology.

Claims

1. Apparatus for the injection moulding of a thermoplatics material comprising a mould block (5, 9), within the block a partition wall (32, 33) dividing the mould into a shape-defining mould space and a heating/cooling jacket, a melt injection channel extending from the mould space, inlet and outlet means in said jacket for passage of heating and cooling media, and temperature and pressure control means for said

4

media characterised in that the jacket is surrounded by a layer of thermal insulation and in that the jacket is connected to reservoirs of heating and cooling media via a pump, servovalves and a control valve, the said servovalves and control valve being operatively connected to a logic unit capable of controlling the injection moulding sequence in accordance with feedback information signals relating to the tempeature and pressure in the thermoplastics material prior to injection into the mould space and during moulding thereof and also the temperature and pressure of the heating and cooling media whereby undesirable moulding conditions may be automatically corrected by varying the temperature and/or pressure of said media.

2. A method of moulding a thermoplastics material which comprises injecting thermoplastics material into a mould space defined by an internal shape-defining partition wall whilst heating said wall before and/or during injection, by a heating medium delivered, at a pressure substantially equal to the injection pressure of the thermoplastics melt, to the opposite side of said wall from the mould space, to a temperature greater than the glass transition temperature (for an amorphous·polymer) or the melting temperature (for a semi-crystalline polymer), and following injection of the thermoplastics material to fill the mould, said heating medium is replaced by a cooling medium characterised in that the injection, heating and cooling operations are controlled continuously by a logic unit which processes signals concerning said operations, said signals comprising a first signal characterising the distribution of temperature and pressure of material prior to injection into the mould space, a second signal specifying the pressure of melt in the mould space, a third signal relating to the pressure of the temperature controlling media and a fourth signal relating to the temperature of said media.

## Patentansprüche

1. Vorrichtung zum Spritzgießen eines thermoplastischen Materials, mit einer Gießform (5, 9), in der eine Trennwand (32, 33) angeordnet ist, welche die Gießform in eine Formhohlraum und in einen Heiz-/Kühlmantel unterteilt, einem vom Formhohlraum ausgehenden Schmelzeeinspritzkanal, Eiinlaß- und Auslaßmitteln im Mantel zum Durchlassen von Heiz- und Kühlmedien sowie Temperatur- und Druckkontrolleinrichtungen für die Medien, dadurch gekennzeichnet, daß der Mantel mit einer Lage von Wärmeisolierung umgeben ist und daß der Mantel mit Behältern für Heiz- und Kühlmedien über eine Pumpe, Servoventile und ein Steuerventil verbuden ist, wobei die Servoventile und das Steuerventil mit einer Logikeinheit zum Steuern des Spritzgieablaufes entsprechend rückgeführten Informationssignalen betreffend Temperatur und Druck im thermoplastischen Material vor dem Einspritzen in den Formhohlraum und während des Gießens sowie auch betreffend Temperatur und Druck de Heiz- und Kühlmedien in Wlrkverbindung stehen, wodurch unerwünschte Gießbedingugen durch Ändern der Temperatur und/oder des Druckes der Medien selbsttätig korrigiert werden können.

2. Verfahren zum Gießen eines thermoplastischen Materials durch Einspritzen von thermoplastischem Mateiral in einen durch eine innere formgebende Trennwand bestimmten Formhohlraum, wobei die Wand vor dem Einspritzen und/oder während des Einspritzens mittels eines unter einem dem Einspritzdruck der thermoplastischen Schmelze im wesentlichen gleichen Druck gegen die dem Formhohlraum gegenüberliegende Seite der Wand zugeführten Heizmediums auf eine höhere Temperatur als die Glasumwandlungstemperatur (für ein amorphes Polymer) oder die Schmelztemperatur (für ein halbkristallines Polymer) erhizt wird und nach dem Einspritzen des thermoplastischen Materials zum Füllen der Form das Heizmedium durch ein Kühlmedium ersetzt wird, dadurch gekennzeichnet, daß die Einspritz-, Heiz- und Kühlvorgänge mittels einer Logikeinheit kontinuierlich gesteuert werden, die diese Vorgänge betreffende Signale verarbeitet, welche Signale ein die Tempeatur- und Druckverteilung des Materials vor dem Einspritzen in den Formhohlraum kennzeichnendes erstes Signal, ein den Druck der Schmelze im Formhohlraum darstellendes zweites Signal, ein den Druck der Temperatursteuermedien betreffendes drittes Signal und ein die Temperatur dieser Medien betreffendes viertes Signal umfassen.

## Revendications

1. Appareil pour le moulage par injection d'une matière thermo-plastique comprenant un moule (5, 9) à l'intérieur duquel se trouve un cloison (32, 33) divisant le moule en une cavité de moulage qui difinit la forme et en une chemise de réchauffage/réfrigérant, un canal pour l'injection de la masse fondue s'étendant depuis la cavite de moulage, des moyens d'admission et d'echappement dans ladite chemise pour permettre le passage des agents de chauffage et de refroidissement et des moyens pour contrôler la température et la pression desdits agents caracterisé en ce que la chemise est entourée d'une couche d'isolation thermique et en ce que la chemise est liée à des reservoirs d'agents de chauffage et de refroidissement par un pompe, des servosoupapes et un soupape de contrôle, lesdits servosoupapes et le soupape de contrôle étant liés opérativement avec une unité de logique capable de contrôler la séquence du moulage par injection en accord avec des signaux d'information donnés en retour afférents à la température et la pression dans la matière thermo-plastique avant l'injection dans la cavité de moulage et durant le moulage comme aussi la température et la pression des agents de chauffage et de refroidissement et par ce moyens des conditions de moulage indésirables peuvent être automatiquement corrigées par la variation de la température et/ou la pression desdits agents.

2. Méthode de mouler une matière thermo-plastique qui comprend l'injection de matière thermo-plastique dans une cavité de moulage definie par une cloison interne qui definit la forme, ladite cloison étant chauffée avant et/ou durant l'injection, par un agent de chauffage liveré à une pression substantiellement égale à la pression d'injection de la masse fondue thermo-plastique, à l'autre coté de cette cloison que la cavité de moulage, jusque'à une température supérieure à la température de transformation de verre (pour un polymère amorphe) ou la température de fusion (pour un polymère demi-cristallin) et suivant l'injection de la matière thermo-plastique pour remplir le moule, ledit agent de chauffage est remplacé par un agent de refroidissement caractérisé en ce que les opérations d'injection, de chauffage et de refroidissement sont contrôlées continuellement par une unité de logique qui prépare des signaux concernant lesdites opérations, lesdits signaux comprenant un premier signal caractérisant la distribution de la température et la pression de la matière avant l'injection dans la cavité de moulage, un deuxième signal précisant la pression de la masse fondue dans la cavité de moulage, un troisième signal qui se rapporte à la pression des moyens pour contrôler la température et un quatrième signal qui se rapporte à la température desdits moyens.

FIG.1

FIG.2

EP 0 202 372 B1